# EUROPÄISCHE PATENTSCHRIFT

(11) **EP 1 145 615 B1**
(45) Veröffentlichungstag und Bekanntmachung des Hinweises auf die Patenterteilung: **16.06.2004**
(21) Anmeldenummer: 01108451.4
(22) Anmeldetag: 04.04.2001
(51) Int. Cl.: A01D 34/73

(54) **Mähmaschine**
Mowing machine
Faucheuse

(30) Priorität: 13.04.2000 DE 10018391
(43) Veröffentlichungstag der Anmeldung: 17.10.2001
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE); Bolte, Albert, Dipl.-Ing., 48480 Spelle (DE)

(56) Entgegenhaltungen:
- EP-A- 0 157 453
- EP-A- 0 219 904
- EP-A- 0 809 929
- EP-A- 0 887 006
- DE-B- 1 632 823
- FR-A- 2 072 365
- FR-A- 2 756 135
- US-A- 5 884 461

## Beschreibung

Die Erfindung betrifft eine Mähmaschine zum Mähen von stehendem landwirtschaftlichem Halm- und Blattgut nach dem Oberbegriff des Anspruchs 1 und besteht aus mindestens einem, einen um eine aufwärts gerichtete Achse drehbaren, scheibenförmigen Träger aufweisenden Mähkörper, der an seiner Peripherie mit zwei oder mehreren drehbar angebrachten.Mähelementen bzw. Schneidmessern versehen ist.

Aus der EP 0 219 904 B1 ist eine Mähmaschine bekannt geworden, bei der zur drehbaren Halterung des Mähelementes/Schneidmessers am Träger des Mähkörpers ein erstes Befestigungsglied vorgesehen ist, das sich durch ein an der Unterseite des scheibenförmigen Trägers befindliches Stützglied, durch den Träger und durch ein an der Oberseite des Trägers angebrachtes laschenförmiges Halteglied erstreckt und an der Oberseite des Trägers zur Befestigung einen Schraubenkopf oder eine Mutter aufweist. Im Bereich des Schraubenkopfes oder der Mutter ist der Träger mit etwa radial nach außen gerichteten, nach oben weisenden, gebördelten Kanten versehen, die den Schraubenkopf oder die Mutter des ersten Befestigungsgliedes zumindest teilweise umgeben. Zur Arretierung des Stützgliedes und des Haltegliedes am Träger des Mähkörpers ist ein zweites Befestigungsglied vorgesehen, welches zwischen dem ersten Befestigungsglied und einer Drehachse des Mähkörpers nahe dem ersten Befestigungsglied angebracht ist und an der Oberseite des Träger ebenfalls mit einem Schraubenkopf oder einer Mutter befestigt ist. Nach der EP 0 219 904 B1 ist es vorgesehen, den Träger der Mähelemente/Schneidmesser aus einem gehärteten Material herzustellen, um dadurch positive Auswirkungen auf die Festigkeit und die Formbeständigkeit des Trägers zu erreichen. Insbesondere von den gebördelten Kanten im Bereich des Schraubenkopfes oder der Mutter des ersten und des zweiten Befestigungsgliedes soll dabei eine Schutzwirkung für den Schraubenkopf oder die Mutter der Befestigungsglieder ausgehen. Erfahrungen aus dem praktischen Einsatz zeigen jedoch, daß insbesondere Steine oder dgl. Fremdkörper im geschnittenen Halm- und Blattgut einen hohen Verschleiß an der Oberseite des Trägers und damit insbesondere an den gebördelten Kanten verursachen, so daß diese nach nur geringer Einsatzzeit keine ausreichende Schutzwirkung mehr auf den Schraubenkopf oder die Mutter des ersten und zweiten Befestigungsgliedes ausüben können. Daraus ergibt sich dann eine Abnutzung des unzureichend geschützten Schraubenkopfes oder der Mutter insbesondere des ersten aber auch des zweiten Befestigungsgliedes, so daß nach kurzer Zeit ein Lösen des ersten Befestigungsgliedes und damit ein Wechseln der Mähelemente/Schneidmesser nicht mehr möglich ist. Desweiteren bedeutet die Abnutzung der gebördelten Kanten die Zerstörung des Mähkörpers. In dem Fall gibt es nur eine Abhilfe, nämlich den Austausch des gesamten Trägers des Mähkörpers, der jedoch mit hohen Reparaturkosten verbunden ist.

Aufgabe der Erfindung ist es daher, eine Mähmaschine zum Mähen von stehendem Halm- und Blattgut zu schaffen, deren rotierende Schneidelemente bzw. deren Befestigungselemente der Schneidmesser an den Schneidelementen sich durch eine hohe Beständigkeit gegen Verschleiß auszeichnen, der durch Steine oder dgl. Fremdkörper im geschnittenen Halm- und Blattgut hervorgerufen wird. Weiterhin soll im Reparaturfall durch den Austausch eines kostengünstigen Verschleißteiles die Reparaturkosten niedrig gehalten werden.

Zur Lösung der gestellten Aufgabe zeichnet sich die Mähmaschine der vorstehend genannten Art durch die im Anspruch 1 angegebenen Merkmale aus. Hinsichtlich der weiteren Ausgestaltung der Erfindung wird auf die Ansprüche 2 bis 14 verwiesen.

Eine nach den erfindungsgemäßen Merkmalen gestaltete Mähmaschine ist mit zumindest einem, vorzugsweise jedoch mehreren um etwa vertikale Achsen rotierenden und an ihrer Peripherie mit zwei oder mehreren drehbeweglich gehalterten Schneidmessern bestückten Schneidelementen ausgerüstet, welche in der Arbeits- und Betriebsstellung quer zur Fahrt- und Arbeitsrichtung aneinander gereiht sind. Zur Erzeugung einer Schneidwirkung werden die Schneidelemente mit einer hohen Drehzahl angetrieben, so daß die Schneidmesser der Schneidelemente aufgrund der Fliehkraft radial nach außen stehen. Zur drehbeweglichen Aufnahme der Schneidmesser an den Schneidelementen sind erste Befestigungsglieder vorgesehen, die von der Unterseite eines Messerträgers der Schneidelemente sich durch eine Bohrung eines Stützgliedes, durch den Messerträger und durch ein an der Oberseite des Messerträgers befindliches Halteglied erstrekken und an der Oberseite des Messerträgers über einen Schraubenkopf oder eine Mutter befestigt werden können. Ein weiteres, das Stützglied, den Messerträger und das Halteglied durchgreifendes Befestigungsglied dient der Befestigung des Stützgliedes und des Haltegliedes mit dem Messerträger. Um nun den Schraubenkopf oder die Mutter des ersten und des zweiten Befestigungsgliedes wirksam und dauerhaft gegen Verschleiß zu schützen, der durch Steine oder dgl. Fremdkörper im geschnittenen Halm- und Blattgut hervorgerufen wird, ist es nach der Erfindung vorgesehen, das an der Oberseite des Messerträgers angeordnete Halteglied mit einem aufwärtsgerichteten, die Schraubenköpfe / Muttern der Befestigungsglieder vollständig umgebenden Steg zu versehen. Der Steg des Haltegliedes bildet dadurch einen Schutzraum für die Schraubenköpfe / Muttern der Befestigungsglieder, so daß bei der Mäharbeit, bei der die Schneidelemente mit hoher Drehzahl rotieren, Steine oder dgl. Fremdkörper an den Stegen der Halteglieder umgelenkt und oberhalb der Schraubenköpfe / Muttern der Befestigungsglieder abgeführt werden, ohne daß es zu einer Berührung zwischen den Fremdkörpern und den Schraubenköpfen / Muttern kommt. Die Höhe des Steges der Halteglieder entspricht dabei zumindest annähernd der Höhe der Schraubenköpfe bzw. der Muttern. Nach der Erfindung ist es aber auch vorstellbar, den Steg des Haltegliedes an der der Peripherie des Messerträgers zugewandten Seite mit einer Aussparung zu versehen. Dadurch wird eine Möglichkeit geschaffen, daß Schmutzpartikel bei der Mäharbeit sich nicht in dem durch den Steg geformten Schutzraum der Schraubenköpfe / Muttern der Befestigungsglieder ablagern, sondern infolge der großen Fliehkraft durch die Aussparung nach außen heraus geschleudert werden können. Um die Schutzwirkung des Haltegliedes mit dem Steg möglichst lange aufrechterhalten zu können, ist das erfindungsgemäße Halteglied aus einem verschleißfesten Material hergestellt, wobei hier vorzugsweise gehärteter Stahl zur Anwendung kommt. Die Härte des Stahles kann hierbei sehr hohe Werte annehmen, da die Beanspruchung des Haltegliedes im wesentlichen durch Verschleiß gekennzeichnet ist. Eine vorteilhafte Ausführungsform des Haltegliedes ergibt sich, wenn der Steg die Schraubenköpfe / Muttern der Befestigungsglieder in einer länglich runden (ovalen) Form umschließt, wobei zwischen den Schraubenköpfen / Muttern der Befestigungsglieder und dem Steg soviel Freiraum verbleibt, daß ein Schraubenschlüssel (Ringschlüssel) zum Lösen oder Festziehen der Schraubverbindung aufgesetzt werden kann. Somit wird durch die Erfindung ein einfach herstellbares Bauteil zum Schutz der Schraubenköpfe / Muttern der Befestigungsglieder zur Verfügung gestellt, das auch in einem Reparaturfall kostengünstig ersetzt werden kann. Aus Gründen einer besseren Umlenkung bzw. Abführung der Fremdkörper ist die äußere Kante des Steges des Haltegliedes abgeschrägt ausgebildet. Diese abgeschrägten Kanten des Steges werden in dem der Peripherie des Messerträgers zugewandten Bereich des Haltegliedes größer, so daß dadurch im äußeren Bereich der Halteglieder Verschleiß- und Auflaufstücke mit schräg nach oben ansteigenden Führungsflächen zur optimalen Führung des Gutstromes mit den darin enthaltenen Fremdkörpern über die Halteglieder entstehen.

Aus Gründen verbesserter Fördereigenschaften des geschnittenen Halm- und Blattgutes weisen die Messerträger der Schneidelemente beidseitig von einer durch die Befestigungsglieder führenden gedachten Vertikalebene Konturabschnitte auf, die ausgehend vom Randbereich des Messerträger zur Mitte hin gegenüber dem übrigen Messerträger erhöht ausgebildet sind, wobei die Höhe dieser Konturabschnitte zur Mitte hin zunimmt. Um nun eine rechtwinklig zur vertikalen Drehachse der Schneidelemente ausgerichtete Aufhängung der Schneidmesser erreichen zu können, sind die Halteglieder in einer Vertiefung des Messerträgers untergebracht, die in ihrem Verlauf zur Peripherie des Messerträgers hin flacher wird und in der Nähe der Peripherie des Messerträgers endet.

Gemäß einem weiteren vorteilhaften Aspekt der Erfindung kann es vorgesehen sein, daß die Halteglieder symmetrisch gestaltet sind und somit in zwei verschiedenen Anbaupositionen in den Vertiefungen der Messerträger einsetzbar sind. Das bedeutet, daß das Halteglied um 180 Grad gedreht in die Vertiefung eingesetzt werden kann, so daß die der Peripherie des Messerträgers zugewandte, abgenutzte Seite des Haltegliedes sich dann in dem der Drehachse des Messerträgers zugewandten Bereich befindet. Daraus ergibt sich eine deutliche Erhöhung der Standzeit und eine Reduzierung der Reparaturkosten.

Gemäß einer vorteilhaften Ausbildung der Erfindung kann die vorstehend aufgeführte Art der Befestigung der Schneidmesser sowohl an Schneidelementen mit einem Schraubverschluß als auch an Schneidelementen mit einem Schnellwechselverschluß eingesetzt werden. Bei einem Schneidelement mit einem Schraubverschluß wird als Befestigungsglied zur Aufnahme des Schneidmessers ein mit einem Ansatz versehener Schraubbolzen verwendet, welcher eine Bohrung des Schneidmessers durchgreift und sich von der Unterseite des Messerträgers durch das Stützglied, den Messerträger und das Halteglied erstreckt, bevor im Schutzraum des Haltegliedes beispielsweise eine Befestigung mit einer selbstsichernden Mutter vorgesehen ist. Bei einem Schneidelement mit einem Schnellwechselverschluß wird als Befestigungsglied zur Aufnahme des Schneidmessers ebenfalls ein Schraubbolzen eingesetzt, der jedoch an der Unterseite des Messerträgers mit einem federnd nachgiebigen Verriegelungsglied, beispielsweise einer Biegefeder in der Art zusammenwirkt, daß eine zuverlässige, schnell lösbare, drehbewegliche Halterung des Schneidmessers auf dem unteren Abschnitt des Schraubbolzens erreichbar ist.

Eine detaillierte Beschreibung des Gegenstandes der Erfindung erfolgt nun anhand von Ausführungsbeispielen. In der Zeichnung stellt im einzelnen dar:
- Fig.1: eine Draufsicht einer erfindungsgemäßen Mähmaschine in einer Arbeits- und Betriebsstellung;
- Fig.2: eine Schnittdarstellung eines Schneidelementes gemäß Schnitt II-II in Fig.1;
- Fig.3: eine Schnittdarstellung eines weiteren Ausführungsbeispieles ähnlich Fig.2;
- Fig.4: eine perspektivische Darstellung eines Schneidelementes nach der Erfindung in einer Ansicht von oben;
- Fig.5: eine Schnittdarstellung der Befestigung eines Schneidmessers gemäß Schnitt V-V in Fig.4;
- Fig.6: eine perspektivische Darstellung eines weiteren Ausführungsbeispieles ähnlich Fig.4;
- Fig.7: eine Schnittdarstellung ähnlich Fig.5 gemäß Schnitt VII-VII in Fig.6;

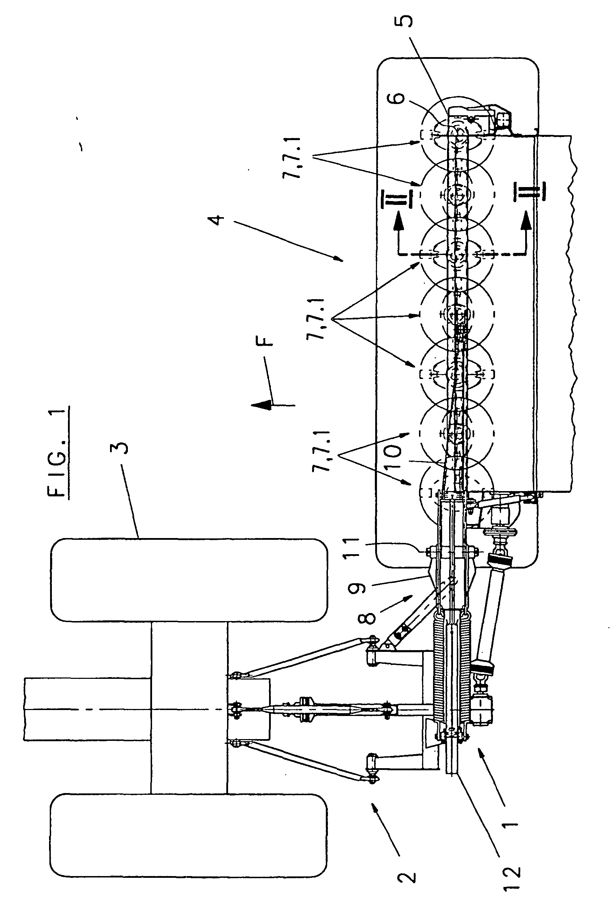

Eine mögliche Ausführungsform einer erfindungsgemäßen Mähmaschine ist in der Figur 1 näher veranschaulicht. Wie aus dieser Figur zu erkennen ist, kann dies eine mit einer Tragvorrichtung 1 an eine Dreipunkthubvorrichtung 2 eines landwirtschaftlichen Trägerfahrzeuges 3 ankoppelbare Mähmaschine sein, deren Mäheinrichtung 4 in einer Arbeits- und Betriebsstellung seitlich von dem landwirtschaftlichen Trägerfahrzeug 3 in Fahrt- und Arbeitsrichtung F über eine Feld- und Wiesenfläche bewegbar ist. Zur Anpassung an verschiedenste Einsatzverhältnisse oder Erntegüter kann der aus einer Anzahl von auf einem Mähholm 5 aneinander gereihten und um etwa vertikale Achsen 6 rotierenden, scheibenförmigen Schneidelementen 7,7.1 bestehenden Mäheinrichtung 4 eine Aufbereitungseinrichtung nachgeordnet sein. Wie weiterhin aus Fig.1 hervorgeht, umfaßt die Tragvorrichtung 1 der Mähmaschine einen in der Arbeits- und Betriebsstellung quer zur Fahrt- und Arbeitsrichtung F ausgerichteten Tragarm 8, welcher aus einem inneren Tragarmteil 9 und einem äußeren Tragarmteil 10 gebildet ist, wobei der äußere Tragarmteil 10 um eine in Fahrt- und Arbeitsrichtung F gerichtete Achse 11 schwenkbar am inneren Tragarmteil 9 gelagert ist. Somit ist es möglich, durch eine Schwenkbewegung des äußeren Tragarmteiles 10 um die Achse 11 die Mäheinrichtung 4 aus der horizontalen Arbeits- und Betriebsstellung in eine etwa vertikal ausgerichtete Transportstellung und umgekehrt aus der Transportstellung zurück in die Arbeits- und Betriebsstellung zu überführen. Dazu kann eine hydraulische Kolben-Zylinder-Anordnung 12 vorgesehen sein, die vom landwirtschaftlichen Trägerfahrzeug 3 aus mit Druckmittel versorgt wird. Im Rahmen der Erfindung ist es jedoch auch vorstellbar, abweichend von der vorstehend beschriebenen Bauart, Mähmaschinen einzusetzen, deren Mäheinrichtung aus Mähtrommeln mit einem über den Mähtrommeln befindlichen Antrieb besteht.

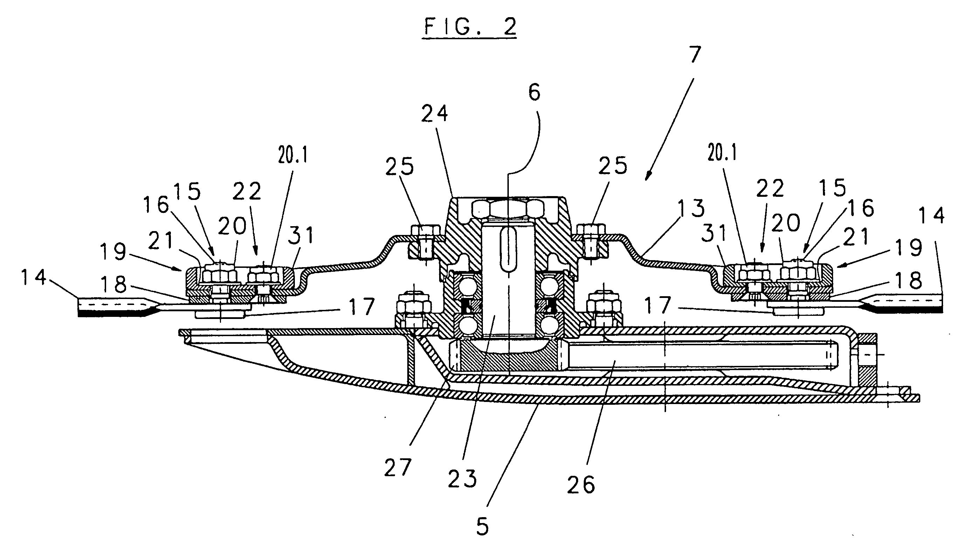

In Fig.2 ist ein erfindungsgemäßes Schneidelement 7 in einer Schnittdarstellung näher veranschaulicht, welches im wesentlichen aus einem tellerförmigen Messerträger 13 gebildet ist, an dessen Peripherie an gegenüberliegenden Stellen Schneidmesser 14 angebracht sind. Zur Befestigung des Schneidmessers 14 (Schraubverschluß) ist dabei ein erstes Befestigungsglied 15 vorgesehen, welches die Form eines Schraubbolzens 16 mit einem unteren Ansatz 17 aufweist. Der Schraubbolzen 16 durchgreift dabei ein Stützglied 18, den Messerträger 13 und ein an der Oberseite des Messerträgers 13 angeordnetes Halteglied 19. Über eine selbstsichernde Mutter 20 sowie eine Unterlegscheibe 21 wird beispielsweise eine zuverlässige, dauerhaft unter Vorspannung verbleibende Schraubverbindung geschaffen. Als Verdrehsicherung der Mutter 20 oder eines ebenfalls verwendbaren Schraubenkopfes können aber auch gerippte Tellerfederscheiben oder dgl. Schraubensicherungen eingesetzt werden. Zur Verbindung des an der Unterseite des Messerträgers befindlichen laschenförmigen Stützgliedes 18 und des an der Oberseite des Messerträgers 13 angeordneten Haltegliedes 19 ist ein zweites Befestigungsglied 22 vorgesehen, das ebenfalls mit einer Mutter 20.1 befestigt ist. Zur Aufnahme und Lagerung des um die Achse 6 drehbaren Messerträgers 13 des Schneidelementes 7 ist eine auf einer gegenüber dem Mähholm 5 drehbar gelagerten Ritzelwelle 23 gehalterte Nabe 24 vorgesehen, auf der der Messerträger 13 mittels Befestigungsschrauben 25 arretiert ist. Der Antrieb der Schneidelemente 7 erfolgt über im Mähholm 5 untergebrachten Stirnrädern 26, die sich mit einem Ritzel 27 der Ritzelwelle 23 im Eingriff befinden.

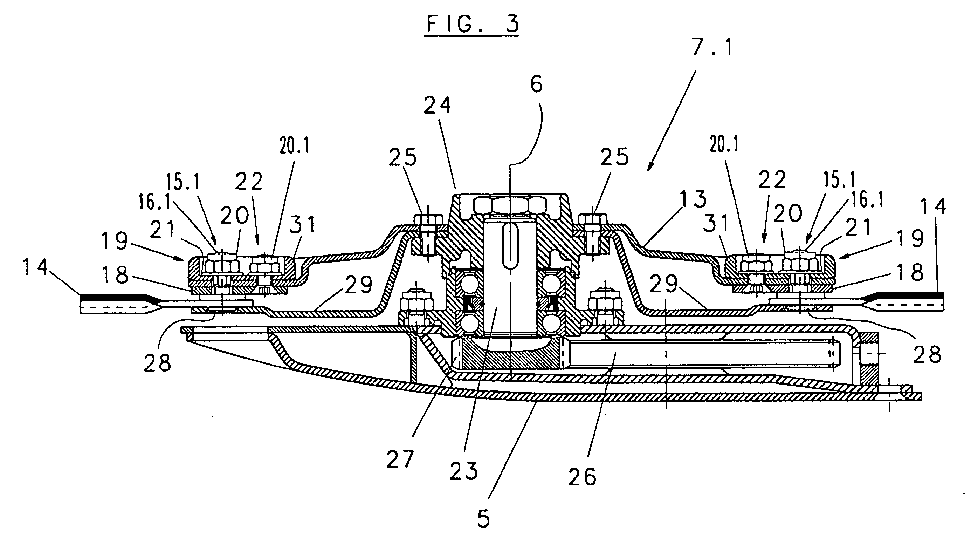

In Fig.3 ist ein Schneidelement 7.1 mit einem Schnellwechselverschluß für die Schneidmesser 14 dargestellt und umfaßt im wesentlichen einen Aufbau, der bereits in Fig.2 wiedergegeben und vorstehend beschrieben ist. Der Unterschied zu dem in Fig.2 dargestellten Schneidelement 7 besteht in der Halterung des Schneidmessers 14 auf einem Befestigungsglied 15.1, wobei dieses von einem Schraubbolzen 16.1 gebildet ist, der an der Unterseite des Messerträgers 13 einen Zapfen 28 zur Aufnahme des Schneidmessers 14 aufweist. Zur Erzeugung einer drehbeweglichen Halterung für das Schneidmesser 14 ist hierbei ein federnd nachgiebiges Verriegelungsglied 29 vorgesehen, welches den Zapfen 28 übergreift und dadurch ein Lösen der drehbeweglichen Halterung des Schneidmessers 14 zuverlässig verhindert. Zum Wechseln oder Ausbauen des Schneidmessers 14 kann das Verriegelungsglied 29, beispielsweise über einen Betätigungshebel oder dgl. Werkzeug nach unten gedrückt werden, so daß das Schneidmesser 14 vom Zapfen 28 herunterrutscht und somit vom Schneidelement 7.1 gelöst ist.

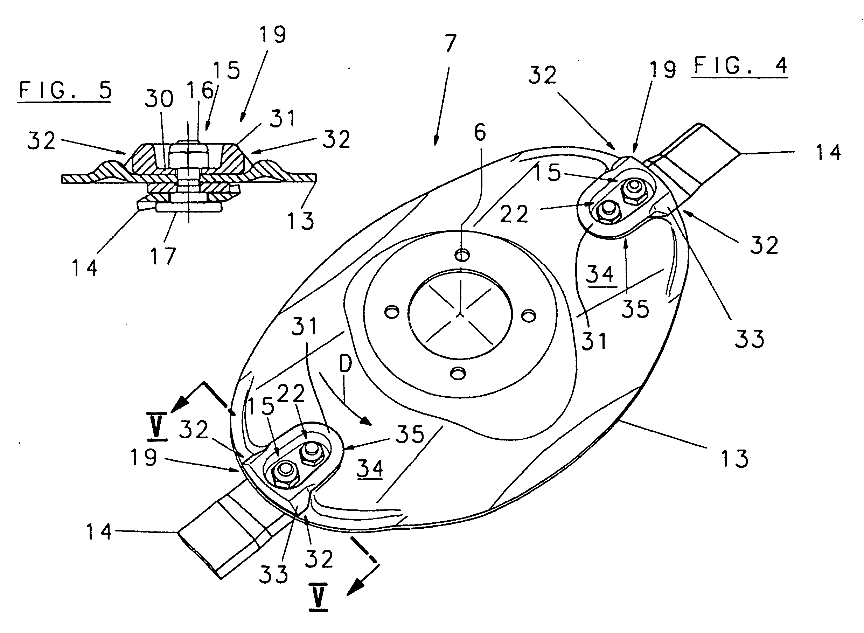

In den Figuren 4 und 5 wird eine vorteilhafte Form des Haltegliedes 19 in einer perspektivischen Darstellung näher veranschaulicht. Ausgehend von einer Grundplatte 30 baut sich ein aufwärts gerichteter Steg 31 auf, der die Muttern 20,20.1 der Befestigungsglieder 15,22 in einer länglich runden (ovalen) Form umschließt, wobei zwischen den Muttern 20,20.1 und dem Steg 31 soviel Freiraum verbleibt, daß ein Schraubenschlüssel (Ringschlüssel oder dgl.) zum Lösen oder Festziehen der Muttern 20,20.1 aufgesetzt werden kann. Der Steg 31 weist dabei eine Höhe auf, die zumindest etwa der Höhe der Muttern 20,20.1 entspricht. Um eine bessere Umlenkung der Fremdkörper an dem Steg 31 des Haltegliedes 19 zu erreichen, ist die äußere Kante des Steges 31 abgeschrägt ausgebildet. Diese Abschrägung ist in einem der Peripherie des Messerträgers 13 zugewandten Bereich vergrößert ausgebildet, so daß dadurch Verschleiß- und Anlaufstücke 32 mit einer schräg nach oben gerichteten Führungsfläche 33 entstehen. Diese Verschleiß- und Anlaufstücke 32 können in Bezug zur Drehrichtung D an der vor- und nachlaufenden Seite des Haltegliedes angeordnet sein. Dadurch wird eine optimale Führung des Gutstromes mit den darin enthaltenen Fremdkörpern erreicht. Damit die Messerträger 13 der Schneidelemente 7 sich ebenfalls durch gute Fördereigenschaften des geschnittenen Halm- und Blattgutes auszeichnen, weisen die.Messerträger 13 beidseitig von einer durch die Befestigungsglieder 15,22 führenden gedachten Vertikalebene erhöhte Konturabschnitte auf, so daß zur Erreichung einer rechtwinklig zur Achse 6 gerichteten Aufhängung der Schneidmesser 14 die Halteglieder 19 in einer zur Peripherie des Messerträgers 13 hin flacher werdenden Vertiefung 35 des Messerträgers 13 angeordnet sind.

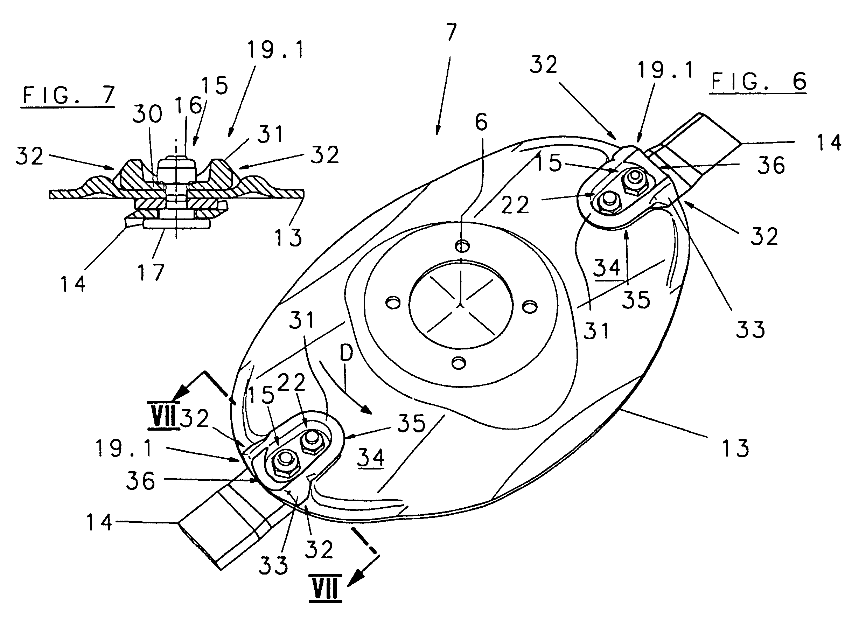

In den Figuren 6 und 7 ist eine weitere Ausführungsform eines erfindungsgemäßen Haltegliedes 19.1 dargestellt. Hierbei ist an der der Peripherie des Messerträgers 13 zugewandten Seite des Haltegliedes 19.1 eine Aussparung 36 vorgesehen, durch die es ermöglicht wird, daß Schmutzpartikel bei der Mäharbeit sich nicht in dem durch den Steg 31 geformten Schutzraum der Muttern 20,20.1 der Befestigungsglieder 15,22 ablagern, sondern infolge der großen Fliehkraft durch die Aussparung 36 nach außen heraus geschleudert werden können.

Obwohl eine bevorzugte Ausführungsform der Erfindung in den Zeichnungen und der dazugehörenden Beschreibung offenbart wurde, sind durch aus weitere Modifikationen und Ausführungen denkbar. So kann es beispielsweise vorgesehen sein, daß die Halteglieder 19 symmetrisch gestaltet sind und somit in zwei verschiedenen Anbaupositionen in den Vertiefungen 35 der Messerträger 13 einsetzbar sind. Das bedeutet, daß das Halteglied 19 um 180 Grad gedreht in die Vertiefung 35 eingesetzt werden kann, so daß die der Peripherie des Messerträgers 13 zugewandte, abgenutzte Seite des Haltegliedes 19 sich dann in dem der Drehachse 6 des Messerträgers 13 zugewandten Bereich befindet.

## Patentansprüche

1. Mähmaschine mit mindestens einem Schneidelement (7,7.1), welches aus einem um eine etwa vertikale Achse (6) rotierenden und an seiner Peripherie mit zumindest zwei drehbeweglich gehalterten Schneidmessern (14) bestückten Messerträger (13) besteht, wobei ein erstes, von einer Unterseite des Messerträgers (13) durch ein Stützglied, den Messerträger (13) und ein an der Oberseite des Messerträgers (13) angeordnetes Halteglied sich erstreckendes, an der Oberseite des Messerträgers (13) über einen Schraubenkopf oder eine Mutter arretierbares Befestigungsglied (15) zur drehbeweglichen Aufnahme eines Schneidmessers (14) am Messerträger (13) vorgesehen ist, sowie mit einem zweiten Befestigungsglied (22) mit einem/einer ebenfalls an der Oberseite des Messerträgers (13) angeordneten Schraubenkopf/Mutter, über das das Stützglied und das Halteglied mit dem Messerträger (13) verbunden sind, **dadurch gekennzeichnet, daß an dem an der Oberseite** des Messerträgers (13) angeordneten Halteglied (19,19.1) ein aufwärts gerichteter, die Schraubenköpfe/Muttern der Befestigungsglieder (15,15.1,22) zumindest bereichsweise umgebender Steg (31) vorgesehen ist.

2. Mähmaschine nach Anspruch 1, **dadurch gekennzeichnet, daß** an dem an der Oberseite des Messerträgers (13) angeordneten Halteglied (19) ein aufwärts gerichteter, die Schraubenköpfe/Muttern der Befestigungsglieder (15,15.1,22) von allen Seiten vollständig umgebender Steg (31) vorgesehen ist.

3. Mähmaschine nach Anspruch 1 und 2, **dadurch gekennzeichnet, daß** die Höhe des Steges (31) des Haltegliedes (19,19.1) zumindest annähernd der Höhe der Schraubenköpfe/Muttern der Befestigungsglieder (15,15.1,22) entspricht.

4. Mähmaschine nach Anspruch 1, **dadurch gekennzeichnet, daß** der Steg (31) des Haltegliedes (19.1) an der der Peripherie des Messerträgers (13) zugewandten Seite eine Aussparung (36) aufweist.

5. Mähmaschine nach einem der Ansprüche 1 bis 4, **dadurch gekennzeichnet, daß** das Halteglied (19,19.1) mit dem Steg (31) aus einem verschleißfesten Material hergestellt ist.

6. Mähmaschine nach einem der Ansprüche 1 bis 4, **dadurch gekennzeichnet, daß** das Halteglied (19,19.1) mit dem Steg (31) aus einem gehärteten Stahl besteht.

7. Mähmaschine nach einem der Ansprüche 1 bis 6, **dadurch gekennzeichnet, daß** das Halteglied (19,19.1) mit dem Steg (31) in einer Vertiefung (35) des Messerträgers (13) angeordnet ist.

8. Mähmaschine nach Anspruch 7, **dadurch gekennzeichnet, daß** das Halteglied (19,19.1) mit dem Steg (31) in einer zur Peripherie des Messerträgers (13) hin flacher werdenden Vertiefung (35) des Messerträgers (13) angebracht ist.

9. Mähmaschine nach einem der Ansprüche 1 bis 8, **dadurch gekennzeichnet, daß** der Steg (31) des Haltegliedes (19,19.1) an seiner oberen äußeren Kante abgeschrägt ausgebildet ist.

10. Mähmaschine nach einem der Ansprüche 1 bis 9, **dadurch gekennzeichnet, daß** der Steg (31) des Haltegliedes (19,19.1) in einem der Peripherie des Messerträgers (13) zugewandten und bezüglich der Drehrichtung (D) vor- und nachlaufenden Bereich Verschleiß- und Auflaufstücke (32) aufweist.

11. Mähmaschine nach einem der Ansprüche 1 bis 10, **dadurch gekennzeichnet, daß** die Verschleiß- und Auflaufstücke (32) eine schräg nach oben ansteigende Führungsfläche (33) bilden.

12. Mähmaschine nach einem der Ansprüche 1 bis 11, **dadurch gekennzeichnet, daß** die Halteglieder (19) durch eine symmetrische Gestaltung in zwei unterschiedlichen Anbaupositionen in den Vertiefungen (35) der Messerträger (13) einsetzbar sind.

13. Mähmaschine nach einem der Ansprüche 1 bis 12, **dadurch gekennzeichnet, daß** das Befestigungsglied (15) zur Aufnahme des Schneidmessers (14) an der Unterseite des Messerträgers (13) mit einem Ansatz (17) versehen ist, durch den das Schneidmesser (14) drehbeweglich gehaltert ist.

14. Mähmaschine nach einem der Ansprüche 1 bis 12, **dadurch gekennzeichnet, daß** das Befestigungsglied (15.1) zur Aufnahme des Schneidmessers (14) an der Unterseite des Messerträgers (13) mit einem federnd nachgiebigen Verriegelungsglied (29) zur drehbeweglichen Halterung des Schneidmessers (14) zusammenwirkt.

## Claims

1. Mowing machine with at least one cutting element (7.7.1), which consists of a cutter bar (13) rotating about an essentially vertical shaft (6) and fitted on its periphery with at least two rotatably supported cutting blades (14), wherein a first fastening element (15), which extends from a lower side of the cutter bar (13) through a support element, the cutter bar (13) and a retaining element arranged on the upper side of the cutter bar (13), and can be locked on the upper side of the cutter bar (13) by a screw head or a nut, is provided on the cutter bar (13) for the rotary reception of a cutting blade (14), and with a second fastening element (22) with a screw head/nut also arranged on the upper side of the cutter bar (13), by which the support element and retaining element are connected to the cutter bar (13), **characterised in that** an upwardly directed bridge (31), at least partially surrounding the screw heads/nuts of the fastening elements (15, 15.1, 22), is provided on the retaining element (19, 19.1) arranged on the upper side of the cutter bar (13).

2. Mowing machine according to claim 1, **characterised in that** an upwardly directed bridge fully surrounding the screw heads/nuts of the fastening elements (15, 15.1, 22) on all sides is provided on the retaining element (19) arranged on the upper side of the cutter bar (13).

3. Mowing machine according to claim 1 and 2, **characterised in that** the height of the bridge (31) of the retaining element (19, 19.1 ) is at least approximately equal to the height of the screw heads/nuts of the fastening elements (15, 15.1, 22).

4. Mowing machine according to claim 1, **characterised in that** the bridge (31) of the retaining element (19.1) exhibits a recess (36) on the side facing the periphery of the cutter bar (13).I

5. Mowing machine according to claims 1 to 4, **characterised in that** the retaining element (19, 19.1), with the bridge (31), is manufactured from a wear-resistant material.

6. Mowing machine according to one of claims 1 to 4, **characterised in that** the retaining element (19, 19.1 ) with the bridge (31) consists of a hardened steel.

7. Mowing machine according to one of claims 1 to 6, **characterised in that** the retaining element (19, 19.1) with the bridge (31) is arranged in a recess (35) of the cutter bar (13).

8. Mowing machine according to claim 7, **characterised in that** the retaining element (19, 19.1) with the bridge (31) is fitted in a recess (35) of the cutter bar (13) that becomes flatter toward the periphery of the cutter bar (13).

9. Mowing machine according to one of claims 1 to 8, **characterised in that** the bridge (31) of the retaining element (19, 19.1) is designed so that it is bevelled on its upper outer edge.

10. Mowing machine according to one of claims 1 to 9, **characterised in that** the bridge (31) of the retaining element (19, 19.1) exhibits wearing and stopping pieces (32) in an area facing the periphery of the cutter bar (13) and is leading and trailing relative to the direction of rotation (D).

11. Mowing machine according to one of claims 1 to 10, **characterised in that** the wearing and stopping pieces (32) form an obliquely upwardly rising guide surface (33).

12. Mowing machine according to one of laims 1 to 11, **characterised in that** the retaining elements (19) may be inserted in the recesses (35) of the cutter bars (13) by means of a symmetrical design in two different fitting positions.

13. Mowing machine according to one of claims 1 to 12, **characterised in that** the fastening element (15) is provided, for receiving the cutting blade (14) on the lower side of the cutter bar (13), with a shoulder (17) by means of which the cutting blade (14) is rotatably supported.

14. Mowing machine according to one of claims 1 to 12, **characterised in that** the fastening element (15.1), in order to support the cutting blade (14) on the lower side of the cutter bar (13), interacts with a flexible interlocking element (29) for rotatably supporting the cutting blade (14).

## Revendications

1. Faucheuse avec au moins un élément de coupe (7, 7.1), qui comprend un porte-lame (13) rotatif autour d'un axe (6) sensiblement vertical et équipé à sa périphérie d'au moins deux lames de coupe (14) logées mobiles en rotation, avec sur le porte-lame (13) un premier organe de fixation (15), qui s'étend depuis une face inférieure du porte-lame (13) à travers un organe d'appui, le porte-lame (13) et un organe de maintien disposé à la face supérieure du porte-lame (13), et qui peut être fixé à la face supérieure du porte-lame (13) au moyen d'une tête de vis ou d'un écrou, ainsi qu'avec un deuxième organe de fixation (22) ayant une tête de vis/un écrou également disposé(e) à la face supérieure du porte-lame (13) et par lequel l'organe d'appui et l'organe de maintien sont reliés au porte-lame (13),
**caractérisée en ce que**
sur l'organe de maintien (19, 19.1) disposé à la face supérieure du porte-lame (13) une nervure (31) dirigée vers le haut est prévue entourant du moins partiellement les têtes de vis/écrous des organes de fixation (15, 15.1, 22).

2. Faucheuse selon la revendication 1,
**caractérisée en ce que**
sur l'organe de maintien (19) disposé à la face supérieure du porte-lame (13) une nervure (31) dirigée vers le haut est prévue entourant les têtes de vis/écrous des organes de fixation (15, 15.1, 22) complètement de tous les côtés.

3. Faucheuse selon la revendication 1 et 2,
**caractérisée en ce que**
la hauteur de la nervure (31) de l'organe de maintien (19, 19.1) correspond du moins approximativement à la hauteur des têtes de vis/écrous des organes de fixation (15, 15.1, 22).

4. Faucheuse selon la revendication 1,
**caractérisée en ce que**
la nervure (31) de l'organe de maintien (19.1) présente un évidement (36) situé du côté en regard de la périphérie du porte-lame (13).

5. Faucheuse selon l'une quelconque des revendications 1 à 4,
**caractérisée en ce que**
l'organe de maintien (19, 19.1) avec la nervure (31) est réalisé à partir d'un matériau résistant à l'usure.

6. Faucheuse selon l'une quelconque des revendications 1 à 4,
**caractérisée en ce que**
l'organe de maintien (19, 19.1) avec la nervure (31) est en acier trempé.

7. Faucheuse selon l'une quelconque des revendications 1 à 6,
**caractérisée en ce que**
l'organe de maintien (19, 19.1) avec la nervure (31) est disposé dans un creux (35) du porte-lame (13).

8. Faucheuse selon la revendication 7,
**caractérisée en ce que**
l'organe de maintien (19, 19.1) avec la nervure (31) est disposé dans un creux (35) du porte-lame (13) s'aplatissant en direction de la périphérie du porte-lame (13).

9. Faucheuse selon l'une quelconque des revendications 1 à 8,
**caractérisée en ce que**
la nervure (31) de l'organe de maintien (19, 19.1) est chanfreinée au niveau de son bord extérieur supérieur.

10. Faucheuse selon l'une quelconque des revendications 1 à 9,
**caractérisée en ce que**
la nervure (31) de l'organe de maintien (19, 19.1) présente des sections d'usure et de contact (32) dans une zone en regard de la périphérie du porte-lame (13) et située en amont et en aval par rapport au sens de rotation (D).

11. Faucheuse selon l'une quelconque des revendications 1 à 10,
**caractérisée en ce que**
les sections d'usure et de contact (32) forment une surface de guidage (33) grandissant vers le haut de manière inclinée.

12. Faucheuse selon l'une quelconque des revendications 1 à 11,
**caractérisée en ce que**
les organes de maintien (19), grâce à une configuration symétrique, peuvent être placés dans deux positions de montage différentes dans les creux (35) des porte-lames (13).

13. Faucheuse selon l'une quelconque des revendications 1 à 12,
**caractérisée en ce que**
l'organe de fixation (15), pour loger la lame de coupe (14) à la face inférieure du porte-lame (13), est muni d'un embout (17) par lequel la lame de coupe (14) est maintenue mobile en rotation.

14. Faucheuse selon l'une quelconque des revendications 1 à 12,
**caractérisée en ce que**
l'organe de fixation (15.1), pour loger la lame de coupe (14) à la face inférieure du porte-lame (13), coopère avec un organe de verrouillage élastique (29) pour une fixation mobile en rotation de la lame de coupe (14).
